# EUROPÄISCHE PATENTSCHRIFT

(11) **EP 0 852 083 B1**
(45) Veröffentlichungstag und Bekanntmachung des Hinweises auf die Patenterteilung: **12.01.2000**
(21) Anmeldenummer: 96932481.3
(22) Anmeldetag: 09.09.1996
(51) Int. Cl.: H02K 23/66, G01P 3/487

(54) **VORRICHTUNG ZUR ROTORDREHZAHL- BZW. ROTORPOSITIONSERFASSUNG EINES PERMANENTERREGTEN ELEKTROMOTORS**
DEVICE FOR DETECTING THE ROTOR SPEED OR POSITION IN A CONTINUOUSLY EXCITED ELECTRIC MOTOR
DISPOSITIF DE DETECTION DE LA VITESSE DE ROTATION ET DE LA POSITION D'UN ROTOR D'UN MOTEUR ELECTRIQUE A EXCITATION CONTINUE

(30) Priorität: 20.09.1995 DE 95114827
(43) Veröffentlichungstag der Anmeldung: 08.07.1998
(73) Patentinhaber: SIEMENS AKTIENGESELLSCHAFT, 80333 München (DE)
(72) Erfinder: REDELBERGER, Harald, D-97273 Kürnach (DE)
(86) Internationale Anmeldenummer: EP9603936
(87) Internationale Veröffentlichungsnummer: WO9711520

(56) Entgegenhaltungen:
- EP-A- 0 359 854
- EP-A- 0 524 384
- FR-A- 2 693 054
- GB-A- 1 522 822

## Beschreibung

Die Erfindung bezieht sich auf eine Vorrichtung zur Rotordrehzahl- bzw. Rotorpositionserfassung eines permanenterregten Elektromotors.

Eine Vorrichtung zur Rotordrehzahl- bzw. Rotorpositionserfassung eines permanenterregten Elektromotors mittels eines durch rotordrehzahlproportionale Pulsation eines Magnetfeldes induzierten Hallsensors mit den Merkmalen a) und b) des Anspruchs 1 ist durch die FR-A-2 693 054 bzw. die korrespondierende DE-A1-42 21 424 bekannt, wobei der Hallsensor am Außenumfang des den Rotor umgebenden Stators in Nähe eines der für die Betriebs-Erregung des Elektromotors vorgesehenen statorseitigen Permanentmagnete angeordnet ist.

Durch die EP-A-0 359 854 ist eine Drehzahlmeßvorrichtung für einen rotorbewickelten Elektromotor bekannt, bei der eine rotorstirnseitige Isolierendscheibe als einen zugeordneten statorseitigen Sensor magnetisch oder optisch drehzahlproportional beeinflussendes Polrad ausgebildet ist.

Der Erfindung liegt die Aufgabe zugrunde, eine Vorrichtung zur Rotordrehzahl- bzw. Rotorpositonserfassung eines permanenterregten Elektromotors zu schaffen, die in für eine Serien-Massenproduktion vorteilhaft aufwandsarmer Weise trotzdem eine im Sinne eines hohen Auflösungsvermögens feinfühlige Rotordrehzahl- bzw. Rotorpositionserfassung gewährleistet.

Die Lösung dieser Aufgabe gelingt durch eine Vorrichtung gemäß Patentanspruch 1; vorteilhafte Ausgestaltungen der Erfindung sind jeweils Gegenstand der Unteransprüche.

Bei der erfindungsgemäßen Vorrichtung läßt sich der meßtechnische Aufwand dadurch wesentlich mindern, daß die an sich nur für die Betriebs-Erregung des Elektromotors vorgesehenen Permanentmagnete zur Schaffung einer statischen Vormagnetisierung für den Hall-Sensor und die an sich zur Aufnahme der Rotorwicklung vorgesehenen Rotorzähne bzw. Rotornuten mit den dadurch über den Rotorumfang gegebenen wechselnden magnetischen Leitwerten zur drehzahlproportionalen Pulsation für den Hall-Sensor mitbenutzt werden, wobei trotzdem aufgrund der insbesondere bei mehrpoligen Motoren hohen Rotorzahnzahl bzw. Rotornutzahl eine hohe Empfindlichkeit der Rotordrehzahl-bzw. der daraus ableitbaren Rotorpositionserfassung gewährleistet ist und aufgrund der Verwendung zumindest eines Differenz-Hallsensors auch bei kleinen Signalamplituden bzw. unabhängig von Schwankungen der induzierten Vormagnetisierung durch den an sich nur für die Betriebserregung des Elektromotors vorgesehenen Permanentmagneten eine zuverlässige Signalauswertung erreicht werden kann.

Zweckmäßigerweise sind zwei örtlich getrennte Hall-Sonden in geringem Abstand, z.B. von ca. 2,5 mm, auf einem Chip integriert sind, die bei dem Wechsel von Rotorzahn zu Rotornut ein unterschiedliches Magnetfeld an der Stelle der einen und der anderen Hall-Sonde bewirken, derart daß das Signal beider Hall-Sonden durch eine Differenzschaltung von der magnetischen Vorspannung trennbar und somit von deren Schwankungen unabhängig auswertbar ist.

Zweckmäßigerweise wird der tangentiale Abstand zwischen den Stirnseiten zweier in Umfangsrichtung aufeinanderfolgender Permanentmagnete, der üblicherweise lediglich zum Einbringen von die Permanentmagnete gegeneinander bzw. gegen das Motorgehäuse verspannenden Federbügelteilen dient, zur Anordnung des Hallsensors mitbenutzt, so daß ohne Notwendigkeit eines gesonderten und insbesondere zusätzlichen Einbauraums der Hallsensor in vorteilhafter Weise sowohl in Nähe der umlaufenden Rotorzähne bzw. Rotornuten als auch in Nähe des für seine Vormagnetisierung mitbenutzten, an sich nur für die Betriebs-Erregung des Elektromotors vorgesehenen Permanentmagnete leicht fixierbar ist.

Die Erfindung sowie weitere vorteilhafte Ausgestaltungen der Erfindung werden im folgenden anhand eines in der Zeichnung schematisch dargestellten Ausführungsbeispiels näher erläutert; darin zeigen:
- FIG 1: in einem axialen Längsschnitt ein topfförmiges Motorgehäuse mit an dessen Innenumfang gehalterten teilschalenförmigen, für die Betriebserregung des Elektromotors vorgesehenen Permanentmagneten;
- FIG 2: eine stirnseitige Draufsicht auf das Motorgehäuse gemäß FIG 1 mit zusätzlich eingesetztem, mit Rotorzähnen und Rotornuten versehenen Rotor.

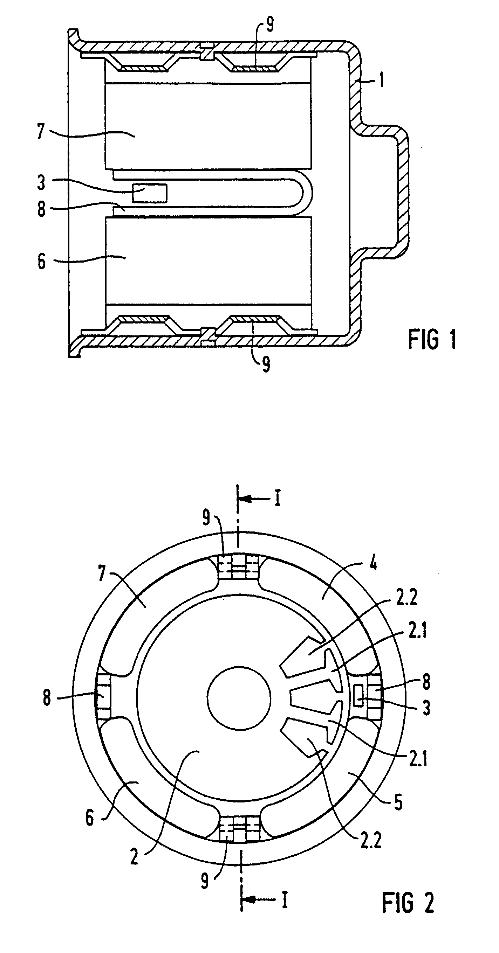

FIG 1,2 zeigen in einem axialen Längsschnitt bzw. in einer stirnseitigen Draufsicht ein topfförmiges Motorgehäuse 1 eines permanenterregten Elektromotors, dessen der Betriebs-erregung dienende teilschalenförmige Permanentmagnete 4-7 am Innenumfang des Motorgehäuses 1 angeordnet sind; zur Positionierung der teilschalenförmigen Permanentmagnete 4-7 dienen Feder- bzw. Haltebügel 8 bzw. 9 die axial in tangentiale Zwischenräume zwischen den tangential einander gegenüberliegenden Stirnseiten von im Umfang aufeinanderfolgenden Permanentmagneten 4-7 eingeschoben sind und diese sowohl gegeneinander als auch gegen die Innenumfangsfläche des Motorgehäuses 1 andrücken.

In FIG 2 ist ein in FIG 1 weggelassener, noch nicht mit einer Rotorwicklung versehener Rotor mit über den Umfang verteilten einander abwechselnden Rotorzähnen 2.1 bzw. Rotornuten 2.2 zur Aufnahme der Rotorwicklung dargestellt.

Zur erfindungsgemäßen Rotordrehzahl- bzw. Rotorpositionserfassung ist in dem einen tangentialen Zwischenraum zwischen den gegenüberliegenden Stirnseiten des einen Permanentmagneten 4 und des am Umfang folgenden anderen Permanentmagneten 5 ein Hallsensor 3 angeordnet, der als Differenz-Hallsensor mit zwei auf einem Chip in gegenseitigem tangentialen Abstand angeordneten Hall-Sonden ausgebildet ist. Dieser Hallsensor 3 wird durch die an sich nur für die Betriebs-Erregung des Elektromotors vorgesehenen Permanentmagnete 4 bzw.5 als ruhende Bauteile mit einer magnetischen Vorspannung versehen. Da der Hallsensor 3 nicht nur in Nähe der für die Betriebs-Erregung vorgesehenen Permanentmagnete 4 bzw.5 sondern auch in Nähe der Außenumfangsfläche des Rotors 2 angeordnet ist, kann in vorteilhafter Weise der Rotor 2 dazu mitbenutzt werden, durch seinen Wechsel von Zahn und Nut im Sinne eines entsprechenden Wechsels des magnetischen Leitwertes ein unterschiedliches Magnetfeld und damit ein drehzahlproportionales Ausgangssignal an dem Hall-Sensor 3 hervorzurufen.

Bei Ausbildung des Hallsensors 3 als Differenz-Hallsensor bewirkt der Wechsel von Rotorzahn 2.1 zu Rotornut 2.2 ein unterschiedliches Magnetfeld an der Stelle der einen Sonde des Differenz-Hallsensors im Verhältnis zu der anderen Sonde des Differenz-Hallsensors; das Signal beider Sonden kann anschließend durch Differenzschaltung von der magnetischen Vorspannung derart getrennt werden, daß deren z.B. aufgrund von Temperatureinflüssen in Kauf zunehmenden Schwankungen für die Ermittlung der Rotordrehzahl ohne Einfluß bleiben.

In einer hier nicht dargestellten Auswerteschaltung kann aufgrund der von der Hall-Sonde 3 erfaßten drehzahlproportionalen Pulszahl bei hoher Auflösung die jeweilige Rotorposition z.B. aufgrund einer erstmaligen festgehaltenen Initialisierungsposition und einer anschließenden inkrementalen Pulserfassung auch die Rotorposition bzw. der Hubweg eines von dem Elektromotor in einem Stellantrieb bewegten Bauteils, insbesondere eines Fensters in einem Fensterheberantrieb bzw. eines Schiebedaches in einem Schiebedachantrieb eines Kraftfahrzeuges ermittelt werden; dementsprechend sind zweckmäßigerweise als permanenterregter Kollektormotor ein aus dem Gleichstrombordnetz eines Kraftfahrzeuges gespeister Kommutatormotor vorgesehen und die erfindungsgemäße Vorrichtung zur Rotordrehzahl- bzw. Rotorpositionserfassung im Sinne einer Hubwegüberwachung mit hubwegabhängigem schnell reagierenden Einklemmschutz beim Anfahren des Fensters bzw. des Schiebedaches gegen ein Hindernis eingesetzt.

## Patentansprüche

1. Vorrichtung zur Rotordrehzahl- bzw. Rotorpositionserfassung eines permanenterregten Elektromotors mittels eines durch rotordrehzahlproportionale Pulsation eines Magnetfeldes induzierten Hallsensors (3) mit den Merkmalen:
a) Zur Erzeugung der rotordrehzahlproportionalen Pulsation des den Hallsensor (3) induzierenden Magnetfeldes ist der mit luftspaltseitigen Rotorzähnen (2.1) bzw. Rotornuten (2.2) versehene Rotor (2) des Elektromotors vorgesehen;
b) zur Erzeugung des den Hallsensor (3) induzierenden Magnetfeldes ist zumindest einer der statorseitigen Permanentmagnete (4-7) für die Betriebs-Erregung des Elektromotors vorgesehen;
c) der Hallsensor (3) ist in Nähe des Außenumfangs des Rotors (2) des Elektromotors und zumindest eines der für die Betriebs-Erregung des Elektromotors vorgesehenen statorseitigen Permanetmagnete (4-7) angeordnet;
d) der Hallsensor (3) ist als Differenz-Hallsensor ausgebildet.

2. Vorrichtung nach Anspruch 1 mit dem Merkmal:
e) Der Hallsensor (3) ist in einem Freiraum zwischen den umfangsseitigen Stirnseiten zweier aufeinanderfolgender statorseitiger Permanentmagnete (4 bzw.5) für die Betriebs-Erregung des Elektromotors, insbesondere zweier statorseitiger Permanetmagnetschalen, angeordnet.

3. Vorrichtung nach zumindest einem der vorhergehenden Ansprüche mit dem Merkmal:
f) Als Hallsensor (3) ist ein durch zumindest einen statorseitigen Permanentmagneten (4 und/oder 5) mit einer magnetischen Vorspannung versehener Differenz-Hallsensor mit zwei örtlich getrennten, insbesondere in einer Baueinheit integrierten, Hall-Sonden mit einem aufgrund der Zahnung des Rotors rotordrehzahlproportionalen, von der magnetischen Vorspannung des Hallsensors (3) unabhängigen Differenzsignal vorgesehen.

4. Vorrichtung nach zumindest einem der vorhergehenden Ansprüche mit dem Merkmal:
g) Als Elektromotor ist ein permanenterregter Kommutatormotor vorgesehen.

5. Vorrichtung nach zumindest einem der vorhergehenden Ansprüche mit dem Merkmal:
h) Der Elektromotor ist als Antrieb in einem Stellantrieb für einen motorbetätigbaren Fensterheberantrieb bzw. Schiebedachantrieb in einem Kraftfahrzeug mit einer Drehzahl-bzw. Positionserfassung des Stellantriebes, insbesondere im Sinne einer Hubwegüberwachung des von dem Stellantrieb angetriebenen Fensters bzw. Schiebedaches, vorgesehen.

6. Vorrichtung nach zumindest einem der vorhergehenden Ansprüche mit dem Merkmal:
i) Der Elektromotor ist für einen motorbetätigten Fensterheberantrieb bzw. Schiebedachantrieb in einem Kraftfahrzeug mit hubwegabhängigem schnell reagierenden Einklemmschutz beim Anfahren des Fensters bzw. des Schiebedachs gegen ein Hindernis vorgesehen.

## Claims

1. Device for detecting the rotor speed or position in a continuously excited electric motor by means of a Hall sensor (3) induced by pulsation, which is proportional to the rotor speed of a magnetic field, having the features:
a) the rotor (2) of the electric motor, which is provided with rotor teeth (2.1) or rotor slots (2.2) on the air-gap side, is provided for generating the pulsation, which is proportional to the rotor speed, of the magnetic field inducing the Hall sensor (3);
b) at least one of the stator-side permanent magnets (4-7) for operationally exciting the electric motor is provided for generating the magnetic field inducing the Hall sensor (3); and
c) the Hall sensor (3) is arranged in the vicinity of the outer circumference of the rotor (2) of the electric motor and of at least one of the permanent magnets (4-7), on the stator side provided, for operationally exciting the electric motor;
d) the Hall sensor (3) is designed as a differential Hall sensor.

2. Device according to Claim 1, having the feature:
e) the Hall sensor (3) is arranged in a clearance between the circumferential end faces of two successive stator-side permanent magnets (4 and 5, respectively) for operationally exciting the electric motor, in particular two stator-side permanent magnet shells.

3. Device according to at least one of the preceding claims, having the feature:
f) provided as Hall sensor (3) is a differential Hall sensor which is provided with a magnetic bias by at least one stator-side permanent magnet (4 and/or 5) and has two spatially separated Hall probes which are particularly integrated in a subassembly and have a differential signal which is proportional to the rotor speed because of the toothing of the rotor and is independent of the magnetic bias of the Hall sensor (3).

4. Device according to at least one of the preceding claims, having the feature:
g) a continuously excited commutator motor is provided as electric motor.

5. Device according to at least one of the preceding claims, having the feature:
h) the electric motor is provided as a drive in an actuator for a motor-actuable window lifter drive or sliding roof drive in a motor vehicle having speed detection or position detection of the actuator, in particular for the purpose of monitoring the stroke path of the window or sliding roof driven by the actuator.

6. Device according to at least one of the preceding claims, having the feature:
i) the electric motor is provided for a motor-actuable window lifter drive or sliding roof drive in a motor vehicle having an anti-jamming protection system which reacts quickly, as a function of stroke path, when the window or the sliding roof moves against an obstacle.

## Revendications

1. Dispositif de détection de la vitesse de rotation et de la position du rotor d'un moteur électrique à excitation continue, au moyen d'un détecteur de Hall (3) induit par pulsation d'un champ magnétique proportionnelle à la vitesse de rotation du rotor ayant les caractéristiques suivantes :
a) pour produire la pulsation du champ magnétique proportionnelle à la vitesse de rotation du rotor et induisant le détecteur de Hall (3), il est prévu le rotor (2) du moteur électrique muni de dents (2.1) et d'encoches (2.2) du côté de l'entrefer;
b) pour produire le champ magnétique induisant le détecteur de Hall (3), il est prévu au moins l'un des aimants permanents (4 à 7) du stator destinés à l'excitation du moteur électrique en vue de le faire fonctionner;
c) le détecteur de Hall (3) est placé à proximité du périmètre extérieur du rotor (2) du moteur électrique et d'au moins un des aimants permanents (4 à 7) du côté du stator prévus pour l'excitation du moteur électrique en vue de le faire fonctionner;
d) le détecteur de Hall (3) est un détecteur de Hall différentiel.

2. Dispositif selon la revendication 1 ayant la caractéristique suivante :
e) le détecteur de Hall (3) est placé dans un espace vide entre les fronts, situés sur le périmètre, de deux aimants permanents (4 et 5) se succédant du côté du stator et destinés à l'excitation du moteur électrique en vue de le faire fonctionner, plus particulièrement de deux aimants permanents de forme incurvée du côté du stator.

3. Dispositif selon au moins l'une des revendications précédentes ayant la caractéristique suivante :
f) comme détecteur de Hall (3), il est prévu un détecteur de Hall différentiel, ayant d'une polarisation magnétique donnée par au moins un aimant permanent (4 et/ou 5) du côté du stator, ayant deux sondes de Hall localement séparées, et plus particulièrement intégrées dans une unité modulaire, ayant un signal différentiel indépendant de la polarisation magnétique du détecteur de Hall (3) et proportionnel à la vitesse de rotation du rotor sur la base de la denture du rotor.

4. Dispositif selon au moins l'une des revendications précédentes ayant la caractéristique suivante :
g) comme moteur électrique, il est prévu un moteur électrique à collecteur à excitation continue.

5. Dispositif selon au moins l'une des revendications précédentes ayant la caractéristique suivante :
h) le moteur électrique est prévu comme entraînement dans un servomoteur pour l'entraînement d'un lève-glace ou d'un toit ouvrant dans un véhicule automobile pouvant être actionnés par un moteur, avec une détection de la vitesse de rotation et de la position du rotor du servomoteur, en particulier en vue de la surveillance de la course de la fenêtre ou du toit ouvrant entraînés par le servomoteur.

6. Dispositif selon au moins l'une des revendications précédentes ayant la caractéristique suivante :
i) le moteur électrique est prévu pour un entraînement de lève-glace ou de toit ouvrant pouvant être actionnés par un moteur dans un véhicule automobile, ayant un dispositif de protection, vis-à-vis du coincement, réagissant rapidement en fonction de la course lorsque la fenêtre ou le toit ouvrant heurte un obstacle.
